# FASCICULE DE BREVET EUROPEEN

(11) **EP 3 390 988 B1**
(45) Date de publication et mention de la délivrance du brevet: **22.05.2024**
(21) Numéro de dépôt: 16822401.2
(22) Date de dépôt: 14.12.2016
(51) Int. Cl.: G01H 9/00, G01V 8/10, G01V 1/38, G08C 23/06, G01D 5/26, H04Q 9/00, G01V 1/20

(54) **UNITE DE MESURE NON ACOUSTIQUE**
NICHT-AKUSTISCHE MESSEINHEIT
NON-ACOUSTIC MEASUREMENT UNIT

(30) Priorité: 16.12.2015 FR 1502607
(43) Date de publication de la demande: 24.10.2018
(73) Titulaire: THALES, 92190 Meudon (FR)
(72) Inventeur: BOUFFARON, Renaud, 06903 Sophia Antipolis (FR); DOISY, Martine, 06903 Sophia Antipolis (FR); BERGOGNE, Christian, 06903 Sophia Antipolis (FR)
(74) Mandataire: Atout PI Laplace
(86) Numéro de dépôt international: PCT/EP2016/081053
(87) Numéro de publication internationale: WO 2017/102873

(56) Documents cités:
- EP-A1- 0 402 185
- US-A- 5 898 517
- Frédéric Audo: "Opto-alimentation et transmission de donées par fibre optique pour les observatoires de fond de mer", , 29 janvier 2013 (2013-01-29), XP055293705, Extrait de l'Internet: URL:https://tel.archives-ouvertes.fr/tel-0 0782502v1/document [extrait le 2016-08-04] cité dans la demande

## Description

L'invention concerne le domaine général des sonars passifs du type comprenant une antenne de réception acoustique sous-marine tout optique. L'invention se rapporte plus particulièrement à un tel sonar comprenant une antenne linéaire acoustique tout optique. Une antenne linéaire acoustique est classiquement réalisée sous forme d'un objet allongé de faible diamètre par rapport à sa longueur intégrant plusieurs capteurs acoustiques. Ce type d'antenne est aussi appelé flûte. Une telle antenne est destinée à être remorquée par un bâtiment marin ou reliée à une station terrestre au moyen d'un câble tracteur de grande longueur (pouvant dépasser 1km et atteindre quelques dizaines de km).

Un sonar passif comprend en outre une unité d'alimentation, permettant de produire de l'énergie destinée à alimenter les capteurs et une unité de traitement destinée à traiter les mesures issues des différents capteurs pour détecter puis éventuellement identifier et localiser des objets. L'unité d'alimentation et l'unité de traitement sont déportées à bord du bâtiment marin ou sur une station terrestre. Une liaison est prévue entre l'antenne acoustique et l'unité d'alimentation ainsi que l'unité de traitement. Lorsque cette liaison est une liaison comprenant uniquement une ou plusieurs fibres optiques, on parle d'une antenne acoustique tout optique. Autrement dit, les liaisons utilisées pour la transmission de l'énergie d'alimentation depuis l'unité d'alimentation jusqu'à l'antenne et pour la transmission, à l'unité de traitement, des informations issues des capteurs sont des fibres optiques. Ces solutions présentent un faible encombrement, sont bon marché et légères. Elles sont insensibles aux perturbations électromagnétiques. Elles permettent, du fait de la faible atténuation en énergie dans les fibres optiques, de lire les mesures effectuées par les capteurs à plusieurs kilomètres et ce, sans qu'aucune source d'énergie électrique ne soit connectée aux capteurs.

Les antennes acoustiques toutes optiques comprennent une pluralité d'hydrophones à fibre optique agissant sur des zones sensibles respectives d'une ou plusieurs fibres optiques. Par hydrophone à fibre optique on entend un hydrophone comprenant une fibre optique qui délivre un signal de mesure qui est un signal optique. Ce signal optique est véhiculé par une fibre optique. Une propriété physique mesurable de ce signal optique est représentative de la pression acoustique à laquelle est soumis l'hydrophone.

Les hydrophones sont des capteurs acoustiques destinés à mesurer une pression acoustique aussi appelée pression dynamique, c'est à dire des rapides variations de faible pression. La pression acoustique mesurée par un hydrophone est typiquement comprise entre 30 et 200 dB référence 1µPa et varie à des fréquences comprises entre 1 Hz et 100kHz.

Lorsque les capteurs acoustiques sont plongés dans l'eau ils sont également soumis à la pression hydrostatique aussi appelée pression statique qui augmente approximativement de 10 000 Pa par mètre d'eau. Les hydrophones étant utilisés en profondeur, la pression hydrostatique subie par un hydrophone est typiquement supérieure à 10 000 Pa. Afin de permettre de mesurer la pression acoustique, les hydrophones filtrent la pression hydrostatique, par exemple au moyen d'un filtre passe haut mécanique intégré ou rapporté du type électrique. Autrement dit, afin d'éviter les phénomènes de saturation et permettre la mesure de la pression acoustique, les capteurs acoustiques ne permettent pas de mesurer la pression hydrostatique, c'est-à-dire une pression au moins égale à 10 000 Pa, sinon ils ne permettraient pas de mesurer la pression acoustique, la différence d'amplitude entre la pression acoustique et la pression statique étant de l'ordre de 100 000 000 à 1 000 000 000 Pa.

Le but des sonars passifs est de détecter et de localiser des objets dans l'eau. Ce but est atteint au moyen de l'antenne de réception acoustique mais la localisation des objets nécessite d'intégrer dans l'antenne acoustique, un ou plusieurs capteurs non acoustiques supplémentaires tels que, par exemple, moins un capteur de cap, au moins un accéléromètre, au moins un capteur de température et/ou au moins un capteur de pression statique (ou d'immersion). Les mesures issues de ces capteurs sont utilisées pour la détection et/ou la localisation des objets dans l'eau. Par capteur non acoustique un entend un capteur configuré pour mesurer une ou plusieurs grandeurs physiques, chaque grandeur physique mesurée étant une mesure autre qu'une pression acoustique.

Certains de ces capteurs existent sous forme de capteurs à fibre optique. De tels capteurs délivrent un signal optique représentatif de la grandeur à mesurer, ledit signal optique étant véhiculé par une fibre optique. Il existe par exemple des capteurs de température à fibre optique et des capteurs de pression statique à fibre optique. Leur intégration dans la flûte est alors aisée. Toutefois, certains capteurs non acoustiques, comme par exemple les capteurs de cap, n'existent que sous forme de capteurs à sortie électrique. Par capteur à sortie électrique, on entend un capteur dont l'élément sensible délivre un signal électrique, comme par exemple une tension ou une intensité, représentatif d'une grandeur physique mesurée. L'intégration de ce type de capteur dans un système de mesure tout optique et en particulier son intégration dans une antenne acoustique de type flûte est alors complexe.

Un but de l'invention est de proposer une solution permettant d'intégrer un capteur non acoustique à sortie électrique dans un système de mesure tout optique.

La demande de brevet US 5,784,337 décrit une solution d'intégration d'un capteur non acoustique à sortie électrique dans une antenne linéaire acoustique. Elle consiste à coupler le capteur non acoustique à une même ligne électrique de transmission de données que celle par laquelle sont remontées les informations issues des hydrophones en réalisant un multiplexage temporel. Ce couplage est réalisé au moyen d'un module électronique alimenté par cette même ligne. Toutefois, cette solution est inadaptée à l'intégration dans un système de mesure tout optique puisqu'elle implique l'installation d'une ligne électrique dédiée au retour des informations issues des capteurs non acoustiques ce qui est contraire aux objectifs de limitation du coût, du poids, d'encombrement et de faible consommation énergétique du système de mesure. Par ailleurs, lorsque l'on souhaite lire à grande distance de façon déportée un signal électrique de faible puissance généré par un capteur à sortie électrique, celui-ci doit être au minimum pré-amplifié électriquement et si nécessaire numérisé au plus près du capteur si l'on ne veut pas dégrader le niveau de bruit du capteur ce qui implique une consommation énergétique supplémentaire.

Une autre solution pour lire à grande distance un signal électrique délivré par un capteur électrique, décrite dans la thèse « Opto-alimentation et transmission de données par fibre optique pour les observatoires de fond de mer » de Frédéric Audo, consiste à utiliser une source d'énergie lumineuse, par exemple de type laser ou diode électroluminescente. Cette source d'énergie lumineuse est disposée à proximité du capteur et couplée au capteur de façon à générer un signal optique modulé en intensité ou en phase en fonction du signal électrique délivré par le capteur. Cette source d'énergie optique est couplée à une fibre optique de retour d'information qui assure la fonction de transport du signal optique jusqu'à un dispositif de traitement. Or, cette solution est incompatible avec une intégration dans une antenne acoustique linéaire sous-marine tout optique. En effet, l'intégration d'une source optique dans l'antenne acoustique nécessite de transmettre une énergie de pompe importante dans la fibre optique s'étendant entre le navire remorqueur (ou la station terrestre) et l'antenne acoustique (ou zone de mesure). Or, dans les applications de type antenne linéaire acoustique sous-marine tout optique, la puissance de pompe transmise au travers d'une fibre optique courant entre le dispositif de traitement et l'antenne acoustique sur une distance pouvant aller jusqu'à quelques dizaines de km doit être minimisé afin de rester compatible de la mesure acoustique (cette puissance ne doit pas dépasser 1 à 2W). En effet, dans ce type d'application on utilise classiquement des fibres monomodes dans lesquelles des effets non linéaires peuvent apparaitre à partir de puissances supérieures à 1W. Ces effets non linéaires perturbent les variations de signal optique induites par les hydrophones. Par ailleurs, les lasers à haute puissance générant une énergie de pompe importante de l'ordre de 5W sont des lasers utilisant l'effet Raman qui ont des bruits d'intensité trop élevés pour des applications acoustiques. Les hautes puissances ne permettent pas non plus l'utilisation de connecteurs optiques standards bon marché qui résistent peu de temps à ces puissances.

Les demandes de brevet US 5, 898, 517 et EP 0 402 185 A1 décrivent des unités de mesure comprenant des capteurs non acoustiques couplés à des fibres optiques. Un autre but de l'invention est de pallier au moins un des inconvénients précités.

A cet effet l'invention a pour objet une unité de mesure non acoustique destinée à être intégrée dans une antenne, dite antenne acoustique, tout optique comprenant au moins un hydrophone, ladite unité de mesure non acoustique comprenant une portion d'une fibre optique, dite non acoustique, destinée à véhiculer des mesures non acoustiques, au moins un capteur non acoustique à sortie électrique apte à délivrer au moins un signal électrique représentatif d'au moins une grandeur physique, et un transducteur électro-optique passif soumis audit signal électrique, ledit transducteur électro-optique passif agissant sur une contrainte mécanique subie par une première zone sensible de la portion de fibre optique, de façon qu'une valeur d'une propriété mesurable d'un premier signal optique véhiculé par la fibre optique non acoustique est représentative du signal électrique, et au moins une cellule photovoltaïque couplée électriquement audit capteur non acoustique pour alimenter électriquement ledit capteur.

L'unité de mesure comprend en outre avantageusement au moins une des caractéristiques ci-dessous prises seules ou en combinaison :
- la cellule photovoltaïque est alimentée en énergie lumineuse au moyen de la fibre optique destinée à véhiculer des mesures non acoustique, dite fibre optique non acoustique,
- la cellule photovoltaïque est alimentée en énergie lumineuse au moyen d'un résidu de pompe issu du transducteur électro-optique,
- le transducteur électro-optique passif est un transducteur piézoélectrique,
- le signal électrique est un signal numérique,
- le capteur est apte à délivrer des mesures relatives à plusieurs grandeurs physiques, le signal électrique étant une trame numérique dans lequel les mesures relatives aux différentes grandeurs physiques sont multiplexées temporellement,
- au moins un capteur non acoustique à sortie électrique est un capteur de cap.

L'invention se rapporte également à un dispositif de mesure conforme aux revendications 7 à 17.

L'invention se rapporte également à un système de mesure comprenant un dispositif de démultiplexage comprenant au moins un démultiplexeur optique relié à la fibre optique principale recevant ledit premier signal et ledit deuxième signal et permettant d'isoler le premier signal optique et ledit deuxième signal optique.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un exemple de sonar comprenant une antenne linaire acoustique tout optique remorquée par un navire,
- la figure 2 représente schématiquement un premier exemple d'un système de mesure d'un sonar selon l'invention,
- la figure 3 représente schématiquement un deuxième exemple d'un système de mesure d'un sonar selon l'invention,
- la figure 4 représente schématiquement un troisième exemple d'un système de mesure d'un sonar selon l'invention.

D'une figure à l'autre, les mêmes éléments sont repérés par les mêmes références.

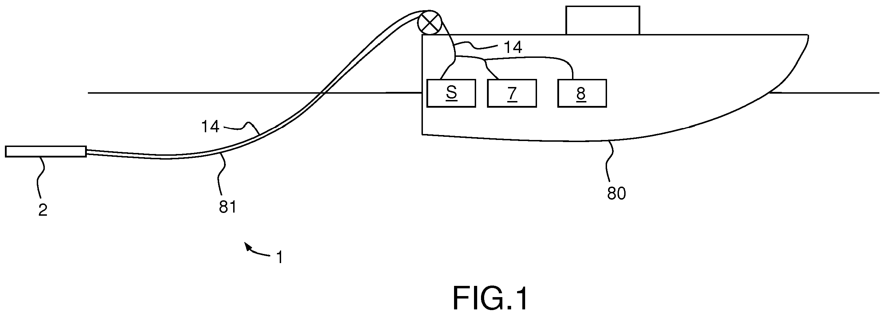

Comme représenté schématiquement sur la figure 1, l'invention se rapporte à un sonar. Le sonar comprend typiquement un dispositif de mesure comprenant une antenne linéaire 2, dite antenne acoustique dans la suite du texte, une source optique et un lecteur/récepteur. Cette antenne 2 est remorquée par un bâtiment marin 80 tel qu'un navire, au moyen d'un câble de traction 81. Cette antenne 2 comprend au moins un hydrophone et au moins une unité de mesure non acoustique. Les hydrophones et l'unité de mesure non acoustique 5 permettent de délivrer des mesures acoustiques et respectivement des mesures non acoustiques sous forme de signaux optiques véhiculés au moyen d'une fibre optique principale 14 depuis l'antenne 2 jusqu'à un lecteur/récepteur 7. La fibre optique principale 14 comprend une première extrémité reliée à l'antenne de réception acoustique et une deuxième extrémité reliée à au moins une source optique S et à un lecteur/récepteur 7. Le lecteur/récepteur 7 permet de discriminer les mesures acoustiques et non acoustiques à partir des signaux véhicules par la fibre optique principale 14. La source optique S permet de générer un signal optique dit signal optique d'excitation pouvant être une énergie de pompe. La source optique S est couplée à la fibre optique principale 14 destinée à véhiculer ledit signal optique d'excitation jusqu'à l'antenne 2. Le sonar comprend également une unité de traitement 8 comprenant au moins un calculateur configuré pour détecter et, de préférence, pour identifier et localiser des objets à partir de mesures acoustiques et non acoustiques issues de l'antenne acoustique 2 et identifiées par le lecteur/récepteur 7.

La source optique S, le lecteur/récepteur 7 et l'unité de traitement 8 sont déportés. Autrement dit, ces unités sont extérieures à l'antenne linéaire acoustique 2. Elles sont avantageusement installées à bord d'un bâtiment marin 80 ou sur une station terrestre.

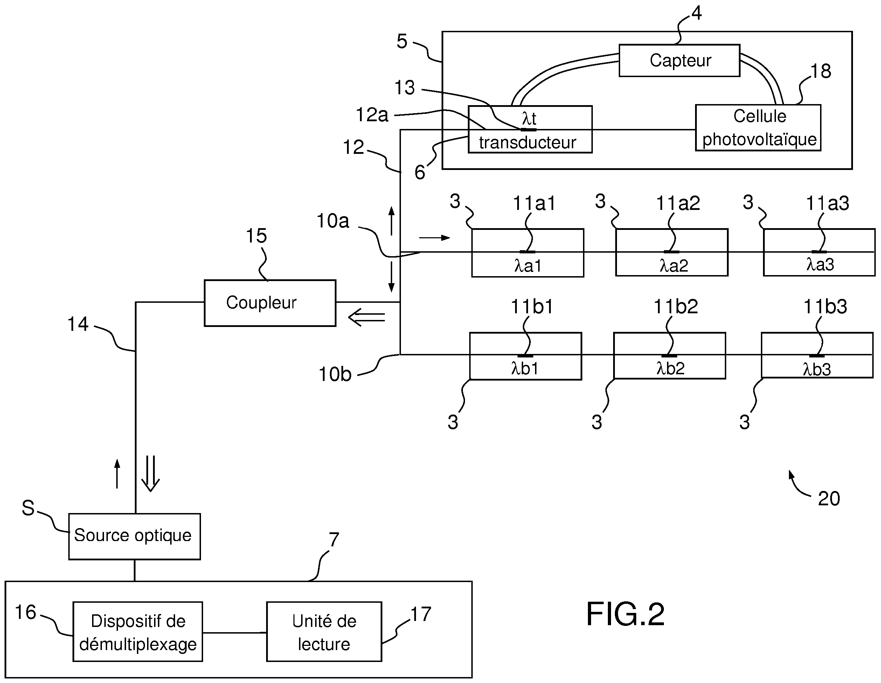

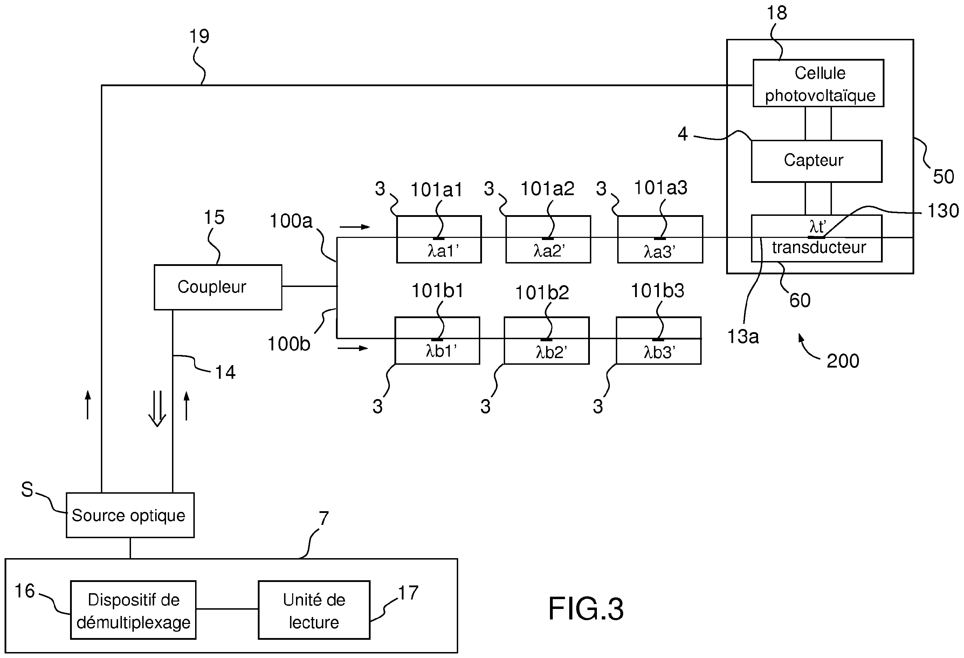

L'antenne acoustique 2 se présente essentiellement sous la forme d'un tuyau allongé de section sensiblement circulaire comprenant une enveloppe ainsi qu'un ou plusieurs hydrophones et une ou plusieurs unité de mesure non acoustiques 5, comme représenté les figures 2 et 3, l'enveloppe renfermant le ou les hydrophones et la ou les unités de mesure non acoustiques. En variante, l'antenne acoustique 2 se présente essentiellement sous la forme d'une plaque comprenant une enveloppe et les hydrophones et une ou plusieurs unités de mesure non acoustique 5, l'enveloppe renfermant le ou les hydrophones et la ou les unités de mesure non acoustiques.

Comme précisé précédemment, les hydrophones 3 sont des hydrophones à fibre optique. Dans la demande de brevet, on appelle hydrophone à fibre optique un hydrophone agissant sur une contrainte mécanique subie par une zone sensible d'une fibre optique de façon à convertir une pression acoustique à laquelle il est soumis en une contrainte mécanique correspondante subie par la zone sensible de la fibre optique, la fibre optique véhiculant un signal optique dont une propriété physique mesurable présente une valeur représentative de ladite contrainte mécanique. La valeur de la propriété physique du signal optique est représentative de la pression acoustique mesurée par l'hydrophone. En d'autres termes, un tel hydrophone est configuré de sorte que les variations de la pression acoustique externe, à laquelle il est soumis, se traduisent par des variations d'une contrainte mécanique subie par la zone sensible associée, par exemple une variation d'une élongation le long de l'axe de la fibre associée, se traduisant à son tour par des variations d'une propriété physique mesurable d'un signal optique véhiculé par la fibre optique. La propriété physique qui varie est par exemple une phase ou une longueur d'onde d'un signal optique. La valeur de la propriété du signal est représentative de la pression acoustique mesurée par l'hydrophone à fibre optique.

Ces hydrophones peuvent être des hydrophones dits tout optiques du type comprenant un élément sensible à la pression acoustique délivrant directement un signal optique représentatif de la pression acoustique à laquelle il est soumis. Un exemple non limitatif de ce type de capteur est décrit dans la demande de brevet déposée par la demanderesse et publiée avec le numéro de publication FR2974263. En variante, ces hydrophones peuvent être des hydrophones dits hybrides. Un hydrophone hybride comprend un élément sensible à la pression acoustique à sortie électrique, de préférence passif, délivrant un signal électrique de sortie représentatif de la pression acoustique externe à laquelle il est soumis. Il comprend en outre un transducteur électro-optique agissant sur une zone sensible d'une fibre optique, et plus particulièrement sur une contrainte subie par une zone sensible, pour transformer le signal électrique en un signal optique véhiculé par la fibre optique. Le signal optique présente une propriété physique mesurable représentative du signal électrique. Un exemple non limitatif de ce type de capteur est décrit dans la demande de brevet déposée par la demanderesse avec le numéro de publication WO2007/056827.

Dans un exemple, les zones sensibles de fibre optique sur lesquels agissent les hydrophones sont des zones sensibles du type cavités lasers à fibre, avantageusement des lasers à fibre à réseau de Bragg, par exemple du type rétroaction répartie appelés DFB FL en référence à l'expression anglo-saxonne « distributed feedback fiber laser ». Les cavités lasers à fibre à réseau de Bragg comprennent un réseau de Bragg inscrit dans la zone sensible de la fibre optique. Lorsqu'une énergie de pompe est injectée dans la fibre optique par une source optique, la cavité émet un signal optique présentant une longueur d'onde prédéterminée. La longueur d'onde émise varie en fonction de la tension subie par la zone sensible selon l'axe de la fibre, c'est-à-dire selon l'élongation de la zone sensible. La tension mécanique ou élongation subie par la zone sensible est fonction de la pression acoustique externe. La longueur d'onde du signal optique permet de déduire la pression acoustique externe appliquée sur la zone sensible. Les zones sensibles associées aux hydrophones respectifs sont réglées sur des longueurs d'ondes respectives différentes de façon que les signaux émis par les différentes zones sensibles présentent des longueurs d'onde différentes. On dit que les hydrophones sont multiplexés en longueur d'onde.

En variante, la zone sensible est un tronçon de fibre optique standard. Une variation d'élongation de la zone sensible entraîne une variation de la phase d'un signal optique injecté dans la fibre optique en direction du transducteur.

La figure 2 illustre plus précisément un premier exemple d'un système de mesure d'un sonar destiné à délivrer des mesures acoustiques et non acoustiques à l'unité de traitement 8. Ce système de mesure comprend un dispositif de mesure 20 destiné à délivrer des mesures acoustiques et non acoustiques destinées à être utilisées par l'unité de traitement 8 pour la détection et la localisation d'objets. Ce dispositif de mesure 20 comprend une pluralité d'hydrophones à fibre optique 3 et une fibre optique principale 14 permettant de remonter, vers le lecteur/récepteur 7, les mesures issues des hydrophones sous forme optique.

Dans l'exemple non limitatif représenté sur la figure 2, le dispositif de mesure 20 comprend deux fibres optiques 10a, 10b, appelées fibres optiques acoustiques dans la suite du texte, destinées à véhiculer des mesures acoustiques délivrées pas les hydrophones. Autrement dit, ces fibres optiques comprennent des zones sensibles sur lesquelles agissent des hydrophones à cavité laser à fibre. Le nombre d'hydrophones ainsi que le nombre de fibres optiques dites acoustiques sur lesquelles ils agissent représentés sur les figures, ne sont pas limitatifs. Le dispositif de mesure 20 comprend au moins une fibre optique acoustique et au moins un hydrophone.

Chaque fibre optique acoustique 10a, 10b comprend une pluralité de zones sensibles 11ai, 11 bj de fibre optique avec i et j= 1 à 3 représentées en traits épais sur la figure 2.

Nous supposons par la suite que dans l'exemple non limitatif de la figure 2, les hydrophones optiques 3 sont des hydrophones à cavités laser à fibre. Autrement dit, ils agissent sur des zones sensibles 11ai, 11 bj qui sont des cavités lasers à fibre, par exemple, à rétroaction répartie incluses dans les fibres optiques acoustique respectives 10a, 10b et espacés le long de ces fibres optiques acoustiques respectives 10a, 10b. Dans cet exemple, les hydrophones 3 induisent, sous l'effet de variations d'une pression acoustique à laquelle ils sont soumis, des variations de contraintes mécaniques qui sont des variations de tension mécanique ou d'élongation des zones sensibles respectives 11ai, 11bj selon les axes des fibres optiques acoustiques respectives. Ces variations de contraintes induisent des variations des longueurs d'ondes λai, λbj de signaux optiques véhiculés par les fibres optiques acoustiques 10a, 10b qui sont des signaux émis par les zones sensibles respectives 11ai, 11bj. En effet, chaque zone sensible 11ai, 11bj émet, sous l'effet d'un signal de pompe, un signal optique dont la longueur d'onde est représentative de l'élongation qu'elle subit et par conséquent des pressions acoustiques mesurées par les hydrophones respectifs.

La fibre optique principale 14 est couplée aux fibres optiques acoustiques 10a et 10b au moyen d'un coupleur optique 15. La fibre optique principale 14 est connectée en entrée du coupleur optique et les fibres optiques acoustiques sont connectées en sortie du coupleur optique. Le coupleur optique 15 a pour fonction de diviser la puissance du signal optique d'excitation véhiculé par la fibre optique principale 14 connectée en entrée du coupleur optique 15 en une pluralité de parties du signal optique d'excitation injectés sur des fibres optiques connectées en sortie du coupleur optique. Le coupleur permet donc de diviser la puissance du signal optique d'excitation véhiculée sur la fibre optique principale 14 pour injecter des portions de cette puissance sur une pluralité de fibres optiques connectées en sortie du coupleur. Le coupleur optique 15 a aussi pour fonction, dans le sens de la double flèche, de combiner les signaux optiques issus des fibres optiques connectées en sortie du coupleur optique en un seul signal optique dit de retour véhiculé par la fibre optique principale 14. Le signal optique de retour véhicule les caractéristiques des signaux optiques issus des hydrophones agissant sur les fibres optiques connectées en sortie du coupleur.

Les mesures issues des hydrophones sont véhiculées par la fibre optique principale 14 dans un format multiplexé (ici en longueur d'onde). Elles sont transmises au lecteur/récepteur 7 dans un format multiplexé via la fibre optique principale 14. Ainsi les propriétés physiques des signaux respectifs sont observables individuellement par analyse des propriétés des signaux optiques véhiculés par la fibre optique principale 14.

Cela permet de discriminer les signaux sur lesquels agissent les différents hydrophones et d'en déduire les mesures acoustiques issues des hydrophones respectifs à partir des valeurs de la propriété physique des signaux optiques sur lesquels agissent les hydrophones respectifs.

Un but de l'invention est d'intégrer des capteurs acoustiques à sortie électrique dans une architecture tout optique du type de celle décrite sans apport d'électricité et sans modifier cette architecture.

A cet effet, le dispositif de mesure 20 comprend également une unité de mesure non acoustiques 5 selon l'invention comprenant au moins un capteur non acoustique à sortie électrique 4 destiné à délivrer un signal électrique représentatif d'au moins une grandeur physique à mesurer.

Le capteur électrique non acoustique peut être un capteur individuel pouvant être, de façon non limitative, un capteur de cap permettant de mesurer un cap (selon au moins un axe de préférence selon trois axes), un capteur de température permettant de mesurer une température, un capteur d'immersion permettant de mesurer une immersion, et/ou un accéléromètre (permettant de mesurer des accélérations selon au moins un axe de préférence selon trois axes). Un capteur de cap est un appareil qui détecte un angle par rapport à une direction prédéterminée fixe par rapport à un référentiel terrestre.

Selon l'invention, chaque unité de mesure non acoustique 5 comprend en outre un transducteur électro-optique passif 6 connecté électriquement au capteur non acoustique 4 de façon à être alimenté électriquement au moyen du signal électrique délivré par le capteur. Elle comprend également une portion 12a d'une fibre optique 12, appelée fibre optique non acoustique dans la suite du texte, destinée à véhiculer des mesures non acoustiques. La portion 12a comprend une zone sensible 13 sur laquelle agit le transducteur 6. Plus précisément, le transducteur 6 est couplé à une zone sensible 13 de la portion 12a de la fibre optique non acoustique de sorte que lorsque le transducteur est soumis au signal électrique de sortie du capteur acoustique, il agit sur une contrainte mécanique subie par la zone sensible 13 de façon à convertir une grandeur physique mesurée par le capteur non acoustique 4 en une contrainte correspondante subie par la zone sensible 13 de la portion 12a de la fibre optique non acoustique 12 dont la valeur est représentative du signal électrique. La fibre optique non acoustique 12 véhicule alors un signal optique présentant notamment une propriété physique mesurable, par exemple une phase ou une longueur d'onde, dont la valeur est représentative de la valeur de la contrainte mécanique qu'elle subit. La valeur de la propriété physique mesurable de ce signal optique est par conséquent représentative de la valeur de la grandeur physique mesurée par le capteur. En d'autres termes, un tel transducteur 6 est configuré de sorte que les variations d'une grandeur physique à laquelle il est soumis se traduisent par des variations de la contrainte subie par l'autre zone sensible 13 associée, par exemple une variation d'une tension mécanique entrainant une variation d'élongation le long de l'axe de la fibre associée, se traduisant à leur tour par des variations de la valeur de la propriété physique mesurable d'un signal optique véhiculé par la fibre optique. Le transducteur 6 agit sur une même contrainte de fibre optique que les hydrophones. Cette contrainte agit sur une même propriété physique du signal optique que les hydrophones. Il s'agit ici de la longueur d'onde λt. Pour cela les zones sensibles qui couplées aux hydrophones 3 et celles couplées au capteur 4 sont basées sur la même technologie. Si les zones sensibles couplées aux hydrophones sont des cavités lasers à fibre optique inscrites dans les premières fibres optiques, la zone sensible couplée au capteur 4 est une cavité laser à fibre optique inscrit dans la fibre optique non acoustique. Si les zones sensibles couplées aux hydrophones sont des tronçons standards de fibre optique, la zone sensible couplée au capteur 4 aussi.

Par transducteur électro-optique passif 6, on entend un transducteur électro-optique qui ne requiert pas d'énergie électrique autre que celle du signal du capteur 4 pour transformer le signal électrique en une contrainte mécanique ou élongation ou variation d'élongation de la zone sensible 13 représentative du signal électrique. Cette configuration est très avantageuse car elle ne nécessite pas d'énergie extérieure pour transformer le signal électrique de sortie du capteur non acoustique en signal optique. Elle est donc compatible avec les applications d'antenne de réception acoustique et avec des connecteurs optiques classiques. Elle ne nécessite pas non plus de source d'énergie électrique supplémentaire ni de câblage électriques pour assurer cette transformation.

La transformation de la contrainte mécanique subie par la zone sensible de la fibre optique non acoustique couplée au capteur 4 en un signal optique correspondant ainsi que le transport de ce signal optique ne nécessitent pas de source d'énergie dédiée. Seule une puissance de pompe relativement faible (de l'ordre de quelques mW) injectée à grande distance dans la fibre optique non acoustique en direction du transpondeur est nécessaire. Par ailleurs, les informations de sortie du capteur non acoustique étant véhiculées par une fibre optique, elles peuvent être transmises à grande distance sans apport d'énergie significative. La transmission de l'information par fibre optique ne génère pas de bruit.

L'unité de mesure non acoustique 5 comprend également et au moins une cellule photovoltaïque 18 couplée électriquement audit capteur 4 pour alimenter électriquement ledit capteur 4. L'alimentation du capteur 4 ne nécessite donc pas de liaison électrique entre l'unité de mesure non acoustique 5 et le bâtiment marin 80, la cellule photovoltaïque 18 pouvant être alimentée au moyen d'une énergie optique véhiculée par une fibre optique. En variante, l'unité de mesure ne comprend pas de cellule photovoltaïque, cette unité de mesure n'est pas revendiquée.

La cellule photovoltaïque est, par exemple, une diode photovoltaïque.

L'unité de mesure non acoustique 5 selon l'invention présente l'avantage de pouvoir être intégrée dans l'architecture acoustique tout optique précédemment décrite, comprenant les transducteurs et fibres optiques pour véhiculer les signaux issus des transducteurs jusqu'au lecteur/récepteur 7, sans modification de cette architecture et en particulier sans ajout de liaison électrique pour la remontée des mesures non acoustiques issues du capteur 4 vers le bâtiment marin 80. En effet, les mesures non acoustiques sont transformées en signaux optiques présentant une propriété physique mesurable représentative de la mesure non acoustique. Il est possible de remonter cette information sur la fibre optique principale 14 en couplant optiquement la portion de la fibre optique 12 non acoustique de l'unité de mesure non acoustique 5 à la fibre optique principale 14. Par ailleurs cette mesure peut être isolée et différenciée des mesures issues des hydrophones par simple multiplexage.

La figure 2 représente un exemple d'intégration de l'unité de mesure non acoustique 5 selon l'invention dans un dispositif de mesure tout optique 20 selon l'invention.

La fibre optique principale 14 est couplée à la fibre optique non acoustique 12 au moyen du coupleur optique 15. La fibre optique non acoustique 12 est connectée en sortie du coupleur optique 15.

Sur l'exemple non limitatif représenté sur la figure 2, le dispositif de mesure 20 comprend une unité de mesure non acoustique 5 mais il peut en comprendre plusieurs. La (ou les) unité(s) de mesure non acoustique(s) peut (peuvent) être couplée(s) à une ou plusieurs fibres optiques non acoustiques 12.

Avantageusement, les mesures issues des hydrophones respectifs et de l'unité de mesure non acoustique 5 sont véhiculées par la fibre optique principale 14 dans un format multiplexé (en longueur d'onde). Elles sont transmises à l'unité de traitement 7 dans un format multiplexé via la fibre optique principale 14. Cela est également le cas lorsque le dispositif de mesure 20 comprend plusieurs unités de mesure non acoustiques 5. Autrement dit les signaux sur lesquels agissent les capteurs respectifs du dispositif de mesure 20 (hydrophones, capteurs non acoustiques) sont multiplexés de façon que les propriétés physiques portés par les signaux respectifs soient observables individuellement par analyse des valeurs des valeurs de la propriété des signaux optiques guidés par la fibre optique principale 14. A cet effet, les zones sensibles sur lesquelles agissent les capteurs et le(s) transducteur(s) respectifs sont associées à des cavités lasers à fibres réglées sur des longueurs d'onde respectives λai, λbj (i=1 à 3 et j=1 à 3 sur l'exemple non limitatif de la figure 2), λt différentes de façon que les signaux sur lesquels agissent les hydrophones et la (ou les) unité(s) de mesure respectifs présentent des longueurs d'onde respectives différentes.

Cela permet de discriminer les signaux sur lesquels agissent les différents hydrophones et de l'unité de mesure 5 ou des unités de mesures respectives. Plus précisément, cela permet au lecteur/récepteur 7 d'isoler les signaux optiques issus des hydrophones 3 respectifs et de chaque unité de mesure non acoustique 5 et d'en déduire les mesures associées respectives à partir des valeurs de la propriété physique mesurable de ces signaux. Autrement dit, l'invention propose de photo-interroger l'unité de mesure non acoustique 5 au travers de la même chaîne d'interrogation (fibre optique principale) que les hydrophones, c'est-à-dire avec un retour d'information sur la même fibre optique et en utilisant le même dispositif de traitement.

Le transport et la relecture optique des informations issues du capteur ne génèrent pas de perturbations électromagnétiques. Cela permet de garantir un fonctionnement optimal des capteurs et notamment des capteurs de cap dont les mesures peuvent être perturbées par des champs électromagnétiques proches.

La solution proposée est compacte, légère et bon marché. Elle permet d'intégrer le capteur dans une antenne acoustique linéaire de faible diamètre et de densité faible proche de celle de l'eau.

Sur la réalisation de la figure 2, le transducteur 6 agit sur portion 12a d'une fibre optique non acoustique 12 distincte des fibres optiques acoustiques 10a, 10b.

L'exemple représenté sur la figure 3 diffère de l'exemple représenté sur la figure 2 en ce que la fibre optique dite non acoustique est une fibre optique dite acoustique. Autrement dit, la fibre optique 100a, destinée à véhiculer les mesures non acoustiques, qui comprend une zone sensible 130 couplée à un transducteur comprend aussi des zones sensibles 101a1, 101a2, 101a3 couplées à des hydrophones 3 et est donc destinée à véhiculer des mesures acoustiques. L'antenne acoustique 2 comprend, de manière non limitative, deux fibres optiques acoustiques 100a, 100b auxquelles sont couplés des hydrophones 3. Le dispositif de mesure 200 comprend une unité de mesure 50 comprenant un capteur non acoustique à sortie électrique 4 et un transducteur 60. Le transducteur 60 agit sur une zone sensible 130 d'une portion 13a d'une fibre optique acoustique 100a. Cette zone sensible 130 est distincte des zones sensibles 101ai, 101bj sur lesquelles agissent les hydrophones qui sont couplés à la fibre optique acoustique en question 100a. Les zones sensibles respectives sont associées à des cavités lasers à fibres réglées sur des longueurs d'onde respectives λₐᵢ', λbj' (i'=1 à 3et j'=1 à 3 sur l'exemple non limitatif de la figure 3), λt' de façon que les signaux sur lesquels agissent les hydrophones et unité de mesure respectifs présentent des longueurs d'onde respectives différentes. Cette solution ne nécessite pas de fibre optique dédiée pour le transport des informations issues du capteur ni câblage ni source d'énergie électrique dédiés.

On peut aussi envisager un mode de réalisation dans lequel le dispositif de mesure comprend une unique fibre optique, la fibre optique principale. La fibre optique principale est à la fois une fibre optique dite acoustique et une fibre optique dite non acoustique.

Sur la réalisation de la figure 3, la zone sensible 130 sur laquelle agit le transducteur 60 est située en aval des zones sensibles 101ai associés aux hydrophones 3 couplés à la même fibre optique 100a que le transducteur 60 sur le trajet de la partie du faisceau de pompe, guidée par cette fibre 100a, représenté par la simple flèche s'étendant le long de cette fibre 100a. Autrement dit, le transducteur 60 reçoit un résidu de pompe issu des hydrophones 3 couplés à la même fibre optique acoustique 100a. Cette disposition n'est pas limitative. La zone sensible 130 pourrait par exemple s'étendre en amont des zones sensibles sur lesquelles agissent les hydrophones ou entre deux hydrophones.

Le capteur électrique 4 comprend une entrée d'alimentation électrique à laquelle est connectée la cellule photovoltaïque 18 et une sortie par laquelle il délivre un signal électrique, cette sortie étant branchée au transducteur 6 ou 60 de façon à alimenter électriquement le transducteur électro-optique au moyen du signal électrique délivré par le capteur.

Sur la réalisation de la figure 3, la cellule photovoltaïque 18 est couplée à une fibre optique 19, appelée fibre optique d'alimentation, de façon à être alimentée en énergie lumineuse au moyen d'un signal optique véhiculé par la fibre optique 19. Ce signal permet aussi avantageusement de donner à la cellule photovoltaïque 18 la puissance permettant de produire la tension d'alimentation du capteur 4.

La fibre optique d'alimentation 19 assure le transport d'énergie optique entre la source optique S et la cellule photovoltaïque 18. Ce type d'alimentation est compact, léger et peu onéreux et permet, du fait des faibles pertes énergétiques dans une fibre optique, un déport plus important du capteur par rapport à la source S.

Dans la réalisation de la figure 3, la fibre optique d'alimentation 19 est une fibre optique dédiée à l'alimentation en énergie optique de la cellule photovoltaïque. Elle est distincte des fibres optiques acoustiques et non acoustiques. L'alimentation du capteur 4 nécessite donc une fibre optique supplémentaire s'étendant depuis l'autre source optique S jusqu'à la cellule photovoltaïque 18.

Dans la réalisation de la figure 2, la fibre optique d'alimentation permettant d'alimenter la cellule photovoltaïque 18 est la fibre optique non acoustique 12 sur laquelle agit le transducteur 6. Autrement dit, le capteur 4 est alimenté électriquement au moyen d'une cellule photovoltaïque 18 alimentée en énergie lumineuse au moyen de la fibre optique non acoustique 12. La cellule photovoltaïque est couplée à la portion 12a de la fibre optique comprise dans l'unité 5. Plus précisément, la cellule photovoltaïque 18 et le transducteur 6 sont disposés le long de la même fibre optique non acoustique 12 de manière que la cellule photovoltaïque est alimentée par un résidu de lumière de pompe (ou plus généralement d'excitation) sortant de la zone sensible 13 sur laquelle agit le transducteur 6. Autrement dit, la zone sensible 13 sur laquelle agit le transducteur 6 associé au capteur 4 est interposée entre la cellule photovoltaïque 18 et le coupleur 15, ou de manière plus générale entre la source optique S et le coupleur 15, dans le sens de guidage du signal issu de la source S représenté par des flèches simples. L'information électrique issue du capteur est renvoyée dans le sens inverse via le transducteur 6 sous forme de signal optique. Cette configuration utilise la propriété du transducteur qui a besoin d'une alimentation en énergie lumineuse pour que l'inversion de population ait lieu dans sa région active mais qui prélève une faible puissance optique. Les pertes de traversée sont typiquement de 0,4 dB soit moins de 5% du fait des caractéristiques des cavités lasers à fibre optique. Le résidu de pompe, en sortie du transpondeur, peut donc être avantageusement utilisé pour l'alimentation de la cellule photovoltaïque. Cette solution est compacte et légère. En effet, une même fibre optique est utilisée pour la photo-alimentation de la cellule photovoltaïque et le retour des mesures. Il n'est pas nécessaire de dédier une fibre optique reliant la cellule photovoltaïque à une source d'alimentation déportée. Or, il faut remarquer qu'une antenne acoustique comprend typiquement une pluralité de dispositifs de mesure 20, 200, tels que représentés sur la figure 2 ou la figure 3, chaque module de détection étant relié à une source optique S déportée au moyen d'une fibre optique principale dédiée, pouvant mesurer plusieurs centaines de mètres, et comprend au moins un capteur électrique non acoustique. Le fait de prévoir une alimentation de chaque capteur électrique non acoustique telle que représentée sur la figure 2 plutôt que telle que représentée sur la figure 3 permet donc d'économiser, non pas une mais une pluralité de fibres optiques d'alimentation (une pour chaque dispositif de mesure 20, 200). Cette économie de fibres a un impact positif sur un système complet puisqu'elle permet l'utilisation d'un câble de plus faible diamètre pour loger les fibres optiques reliées à une pluralité de dispositifs de mesure. Pour les mêmes raisons, cette économie de fibres permet d'utiliser sur ce câble des connecteurs optiques (souvent indispensable à un système complet) qui contiennent moins de contacts optiques et donc qui sont plus compacts physiquement.

En variante, une deuxième source optique émettant un deuxième faisceau de pompe est couplée à la fibre optique d'alimentation, à la place de la source S, de façon à y injecter le deuxième faisceau de pompe pour que la fibre optique d'alimentation assure le guidage du deuxième faisceau de pompe. En variante, la fibre optique d'alimentation pourrait être une fibre dite optique acoustique, c'est-à-dire couplée à au moins un hydrophone de sorte à être destinée à véhiculer des mesures acoustiques. La cellule photovoltaïque et les hydrophones couplés à cette fibre optique acoustique seraient disposés le long de la fibre optique dite non acoustique 12 de manière que la cellule photovoltaïque est alimentée par un résidu de lumière de pompe (ou plus généralement d'excitation) sortant de la zone sensible sur laquelle agit chaque hydrophone couplé à cette fibre optique acoustique. Cette solution présente les mêmes avantages en termes de compacité que lorsque la fibre optique d'alimentation est une fibre optique non acoustique. Cette fibre optique dite acoustique peut aussi être une fibre optique non acoustique, c'est-à-dire couplée à un transducteur couplé à un capteur non acoustique.

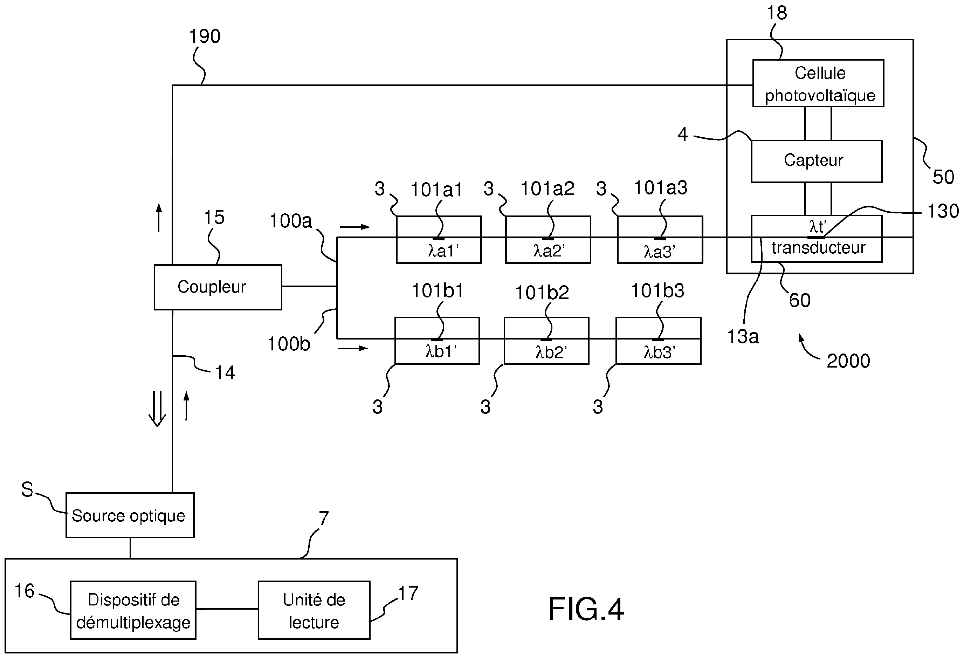

En variante, la fibre optique d'alimentation est une fibre optique dite acoustique distincte de la ou des fibres optiques dites non acoustiques ou une fibre optique distincte de la ou des fibres acoustiques et non acoustiques et connectée en sortie du coupleur optique 15. Sur la figure 4, on a représenté ce dernier. Le dispositif de mesure 2000 de la figure 4 diffère de celui de la figure 3 uniquement par l'alimentation de la cellule photovoltaïque 18. Cette dernière est alimentée au moyen d'une fibre optique d'alimentation 190 couplée au coupleur 15 pour être alimentée au moyen de la fibre optique 14.

La solution dans laquelle la fibre optique d'alimentation est connectée au coupleur présente les mêmes avantages en termes de compacité que lorsque la fibre optique d'alimentation est une fibre optique non acoustique.

De façon générale, l'avantage en termes compacité est obtenu lorsqu'une fibre optique d'alimentation est alimentée via la fibre optique principale 14.

Dans une autre variante, la cellule photovoltaïque 18 peut être commune à plusieurs unités de mesure non acoustiques 5 ou 50. Autrement dit la cellule photovoltaïque alimente plusieurs capteurs non acoustiques 4. Dans le cas où la cellule photovoltaïque 18 est alimentée au moyen d'une fibre optique d'alimentation qui est une fibre optique non acoustique sur laquelle agit au moins une des unités de mesure non acoustiques alimentées par la cellule photovoltaïque, le transducteur de chacune de ces unités de mesure non acoustique est alors interposé entre la cellule photovoltaïque et le coupleur 15 ou de manière plus générale entre la cellule photovoltaïque et la source optique S dans le sens de guidage du signal lumineux d'excitation.

En variante, l'unité de mesure comprend plusieurs cellules photovoltaïques couplées à des fibres optiques d'alimentation respectives différentes. Les cellules photovoltaïques délivrent des énergies électriques respectives additionnées au moyen d'un sommateur, le capteur étant alimenté électriquement au moyen de la somme des énergies électriques.

Dans chaque variante, chaque cellule photovoltaïque peut être couplée optiquement à plusieurs fibres optiques d'alimentation de façon à être alimentée en énergie lumineuse au moyen de plusieurs fibres optiques d'alimentation. Ces fibres peuvent comprendre une ou plusieurs fibres acoustiques et/ou une ou plusieurs fibres non acoustiques et/ou une ou plusieurs fibres distinctes des fibres acoustiques et non acoustiques. Dans ce cas la polarisation des signaux optiques délivrés par les différentes fibres optiques auxquelles est couplée la cellule photovoltaïque est avantageusement contrôlée au moyen de contrôleurs de polarisation avant que leurs énergies soient additionnées au moyen d'un sommateur optique. La somme des énergies lumineuses alimente la cellule photovoltaïque en énergie lumineuse. Par exemple la cellule photovoltaïque est couplée à plusieurs fibres optiques acoustiques en aval des hydrophones dans le sens du trajet du signal lumineux d'excitation de façon à être alimentée au moyen des résidus de pompe issus des hydrophones couplées à ces fibres optiques acoustiques. Cela permet d'alimenter correctement la cellule photovoltaïque et le capteur si les résidus de pompe issus des fibres optiques acoustiques respectives est insuffisant.

Avantageusement, le capteur 4 est faiblement consommateur en énergie. Il consomme avantageusement une énergie inférieure à quelques dizaines de mW. Cela permet de conserver une architecture tout optique sans risque de défaut d'alimentation. Les capteurs de type MEMS permettent d'atteindre ce type de consommation d'énergie électrique.

Avantageusement, le transducteur électro-optique 6 est un transducteur piézoélectrique passif qui transforme une variation de signal électrique (signal de sortie du capteur) au moyen duquel il est alimenté électriquement en une variation de contrainte mécanique subie par la deuxième zone sensible 13 par effet piézoélectrique. La contrainte mécanique, par exemple la tension de la zone sensible, est représentative du signal électrique. Ce type de transducteur permet de transformer avec une grande sensibilité un signal électrique en un deuxième signal optique. Plusieurs exemples de transducteurs électro-optiques de ce type sont décrits dans la demande de brevet déposée par la demanderesse avec le numéro de publication WO2007/056827. Dans cet exemple, les zones sensibles couplées aux transducteurs sont des cavités laser à fibre.

De manière générale, dans un transducteur électro-optique du type piézoélectrique, chaque transducteur acoustique comprend un ou plusieurs élément(s) piézoélectrique(s). Chaque élément piézoélectrique est couplé électriquement au capteur non acoustique à sortie électrique de façon à être alimenté électriquement au moyen du signal électrique délivré par le capteur. L'élément piézoélectrique est couplé mécaniquement à une zone sensible d'une fibre optique de façon que sa déformation, sous l'effet d'une variation du signal électrique, génère une variation de la contrainte subie par la deuxième zone sensible, par exemple de l'élongation de la deuxième zone sensible qui est représentative du signal électrique.

L'élément piézoélectrique peut être, de façon non limitative un barreau piézoélectrique monocristallin ou en céramique, ou un barreau ou une plaque bimorphe (constitué d'une couche de matériau piézoélectrique et d'une couche de métal). L'élément piézoélectrique peut être destiné à se déformer essentiellement en flexion ou bien essentiellement en élongation selon un axe prédéterminé dans le sens de sa longueur sous l'effet d'une variation du champ électrique. L'élément piézoélectrique peut être couplé électro-mécaniquement, c'est-à-dire être avantageusement destiné à vibrer en mode 31 ou 32 (transversal) sous l'effet d'une variation du signal électrique. Cela permet d'obtenir des éléments piézoélectriques simples et présentant une bonne sensibilité électro-optique et une capacité importante. Ce type de transducteur permet notamment de transformer, en un signal optique, un signal électrique faible (typiquement égale à quelques nW). En variante, l'élément piézoélectrique est couplé électro-mécaniquement en mode longitudinal (mode 33).

Selon l'invention, comme visible sur la figure 2, la fibre optique principale 14 est couplée à la source optique S qui est configurée pour émettre un signal optique d'excitation dans le sens de la simple flèche en direction des hydrophones 3 et de l'unité de mesure 5. Dans le cas d'utilisation de zones sensibles de type cavité laser à fibre optique, le signal optique d'excitation est un faisceau de pompe destiné à assurer l'inversion de population dans les zones sensibles des première et deuxième fibres optiques. Avantageusement, la puissance optique injectée dans la fibre optique principale 14 par la source optique S est choisie de façon à éviter les effets non linéaires au sein des premières fibres optiques auxquelles sont couplés les hydrophones. Elle est typiquement choisie de façon à injecter une puissance d'environ 1W dans les premières fibres optiques pour une fibre optique acoustique présentant une longueur de plusieurs kilomètres. Cela permet d'éviter de perturber le fonctionnement des hydrophones lié à des effets non linéaires apparaissant à des puissances supérieures.

Le lecteur/récepteur 7 comprend un dispositif de démultiplexage 16 comprenant au moins un démultiplexeur optique. Le démultiplexeur optique reçoit les signaux optiques transportés par la fibre optique principale 14 et isole ces différents signaux optiques. Autrement dit, le dispositif de démultiplexage permet de discriminer les signaux respectifs sur lesquels agissent les hydrophones et chaque unité de mesure 5.

Le lecteur/récepteur 7 comprend un lecteur 17 permettant de mesurer les valeurs des caractéristiques des signaux optiques issus des hydrophones respectifs et de l'unité de mesure 5 (ou des unités de mesure respectives) et d'en déduire les mesures de pression acoustique respectives et la mesure de grandeur physique ou les mesures de grandeur physique respectives.

Avantageusement, le lecteur 17 comprend au moins un transducteur optoélectronique, par exemple au moins une photodiode, permettant de transformer les signaux optiques respectifs véhiculés par la fibre optique en signaux électriques de retour. Il comprend avantageusement au moins un calculateur permettant de déduire les caractéristiques et autres caractéristiques respectives de ces signaux électriques de retour et d'en déduire les mesures respectives associées.

Le dispositif de démultiplexage 16 peut comprendre au moins un multiplexeur temporel et/ou au moins un multiplexeur fréquentiel (longueur d'onde). Comme les hydrophones 3 et chaque unité de mesure 5 agissent sur la même propriété ou caractéristique physique de signaux optiques véhiculés par la fibre optique, on utilise le même type de multiplexage et de démultiplexage, par exemple temporel et/ou fréquentiel, pour extraire les informations issues des différents hydrophones 3 et de chaque unité de mesure 5. Cela permet de ne pas avoir à modifier la chaîne d'interrogation utilisée par les hydrophones lors de l'intégration du capteur.

Dans le cas d'un multiplexage fréquentiel, le dispositif de démultiplexage comprend un démultiplexeur en longueur d'onde permettant d'isoler tous ces signaux. Ce mode de réalisation est particulièrement avantageux car le multiplexage des signaux est inhérent à la structure des fibres. Il ne requiert pas d'énergie.

En variante, les fibres optiques acoustiques et non acoustiques sont configurées de façon que la variation de l'élongation de chaque zone sensible de ces fibres fasse varier la phase d'un signal optique, avantageusement des portions du signal d'excitation véhiculées par ces fibres respectives. Le dispositif de mesure 20 comprend alors avantageusement un multiplexeur temporel permettant de multiplexer ces portions de signaux d'excitation de façon temporelle. Le multiplexeur temporel est avantageusement installé à bord du navire ou sur une station terrestre. Les premiers signaux et le deuxième signal sont donc transmis à l'unité de traitement de façon décalée dans le temps. Le dispositif de démultiplexage comprend alors un démultiplexeur temporel recevant les signaux véhiculés par la fibre optique principale et permettant d'isoler les signaux sur lesquels agissent les hydrophones 3 et unités de mesures 5 respectifs.

Chaque hydrophone 3 peut comprendre un unique élément sensible. En variante lorsque l'hydrophone est un hydrophone dit « hybride », il peut comprendre plusieurs éléments sensibles connectés en série et/ou en parallèle à un unique transducteur ou connectés au même transducteur de façon que les mesures issues des éléments sensibles respectifs soient transmises à une fibre acoustique via le transducteur dans un format multiplexé temporellement. Chaque capteur non acoustique 4 peut être configuré pour mesurer une ou plusieurs grandeurs physiques (par exemple le cap selon un ou plusieurs axes). Le capteur est donc apte à délivrer des signaux électriques différents représentatifs des grandeurs physiques respectives. Dans le deuxième cas, l'unité de mesure comprend avantageusement un multiplexeur temporel permettant d'appliquer au transducteur les signaux électriques représentatifs des grandeurs physiques respectives dans un format multiplexé temporellement. Ces signaux forment avantageusement une trame numérique. Le dispositif de démultiplexage comprend alors avantageusement un démultiplexeur temporel permettant de séparer les autres signaux électriques représentatifs des grandeurs physiques respectives.

Chaque signal électrique délivré par un capteur est représentatif du signal de sortie du capteur. Il peut s'agir d'un signal de sortie d'un senseur. Il peut s'agir d'un signal analogique ou numérique. Dans un mode de réalisation le signal de sortie du senseur est analogique. Le signal électrique auquel est soumis le transducteur est avantageusement le signal de sortie du senseur numérisé. Autrement dit, un convertisseur AC/DC est interposé entre le capteur et le transpondeur. L'utilisation d'un signal numérique permet de réaliser un multiplexage temporel de sortie du capteur, par exemple dans le cas où il est apte à mesurer plusieurs grandeurs physiques comme précisé précédemment. Le signal électrique est alors une trame numérique dans lequel les mesures relatives aux différentes grandeurs physiques sont multiplexées temporellement.

Un filtre peut être interposé entre le senseur et le transducteur de façon à filtrer des composantes indésirables du signal de sortie du senseur avant injection du signal électrique sur le transducteur.

Sur les réalisations des figures 2 et 3, le système de mesure du sonar comprend un seul dispositif de mesure 20, respectivement 200. En variante, le système de mesure comprend une pluralité de dispositifs de mesure 20, 200 c'est-à-dire une pluralité de fibres optiques principales et une pluralité d'hydrophones 3 et au moins une unité de mesure non acoustique 5 couplés auxdites fibres optiques principales respectives. Chaque fibre optique principale est reliée à un lecteur/récepteur 7 et à une source optique S tel que décrit précédemment. Le système de mesure comprend soit un lecteur/récepteur dédié à chaque fibre principale soit un lecteur/récepteur commun aux fibres optiques principales. Le système de mesure comprend soit une source optique commune à chaque fibre principale soit source optique dédiée à chaque fibre principale.

Avantageusement, les hydrophones et la ou les unités de mesure sont compris dans une antenne linéaire acoustique 2. Avantageusement, les fibres optiques acoustiques et non acoustiques ainsi que le coupleur sont également compris dans l'antenne linéaire non acoustique. L'antenne acoustique 2 est reliée au lecteur/ récepteur 7 et à la source optique S au moyen de l'antenne principale 14 et éventuellement au moyen d'au moins une fibre optique d'alimentation telle que décrite précédemment.

## Revendications

1. Unité de mesure non acoustique (5, 50) destinée à être intégrée dans une antenne (2) tout optique comprenant au moins un hydrophone, ladite unité de mesure non acoustique (5, 50) comprenant au moins un capteur non acoustique à sortie électrique (4) apte à délivrer au moins un signal électrique représentatif d'au moins une grandeur physique, un transducteur électro-optique passif (6, 60) soumis audit signal électrique et une portion (12a, 13a) d'une fibre optique destinée à véhiculer des mesures non acoustiques comprenant une première zone sensible (13, 130) sur laquelle agit ledit transducteur électro-optique passif (6, 60), le transducteur électro-optique passif (6, 60) agissant sur une contrainte mécanique subie par la première zone sensible (13, 130) de façon qu'une valeur d'une propriété mesurable d'un premier signal optique véhiculé par la fibre optique destinée à véhiculer des mesures non acoustiques (12) est représentative du signal électrique, et au moins une cellule photovoltaïque (18) couplée électriquement audit capteur non acoustique (4) pour alimenter électriquement ledit capteur (4), dans laquelle la cellule photovoltaïque (18) est alimentée en énergie lumineuse au moyen de la fibre optique destinée à véhiculer des mesures non acoustiques (12).

2. Unité de mesure non acoustique (5, 50) selon la revendication 1, dans laquelle la cellule photovoltaïque (18) est alimentée en énergie lumineuse au moyen d'un résidu de pompe issu du transducteur électro-optique.

3. Unité de mesure non acoustique (5, 50) selon l'une quelconque des revendications précédentes, dans laquelle le transducteur électro-optique passif (6, 60) est un transducteur piézoélectrique.

4. Unité de mesure non acoustique (5, 50) selon l'une quelconque des revendications précédente, dans laquelle le signal électrique est un signal numérique.

5. Unité de mesure non acoustique (5, 50) selon la revendication précédente, dans laquelle le capteur est apte à délivrer des mesures relatives à plusieurs grandeurs physiques, le signal électrique étant une trame numérique dans lequel les mesures relatives aux différentes grandeurs physiques sont multiplexées temporellement.

6. Unité de mesure non acoustique (5, 50) selon l'une quelconque des revendications précédentes, dans laquelle au moins un capteur non acoustique à sortie électrique est un capteur de cap.

7. Dispositif de mesure (20) destiné à être intégré dans un sonar, comprenant :
- au moins une unité de mesure (5) selon l'une quelconque des revendications précédentes et la fibre optique (12) destinée à véhiculer des mesures non acoustiques,
- au moins un hydrophone à fibre optique (3),
- au moins une fibre optique (10a, 10b) destinée à véhiculer des mesures acoustiques comprenant au moins une zone sensible (11ai, 11bj) sur laquelle agit au moins un dudit au moins un hydrophone à fibre optique de façon qu'une valeur de la propriété mesurable d'un deuxième signal optique, véhiculé par la fibre optique acoustique, est représentative de la pression acoustique mesurée par ledit au moins un dudit au moins un hydrophone à fibre optique (3),
- une fibre optique principale (14) couplée optiquement à fibre optique destinée à véhiculer des mesures acoustiques (10a, 10b) et à la fibre optique destinée à véhiculer des mesures non acoustiques (12) de façon que la fibre optique principale (14) véhicule ledit premier signal optique et ledit deuxième signal optique, ledit premier signal optique et ledit deuxième signal optique étant véhiculés de façon multiplexée le long de fibre optique principale (14).

8. Unité de mesure non acoustique (50) destinée à être intégrée dans une antenne (2) tout optique comprenant au moins un hydrophone, ladite unité de mesure non acoustique (50) comprenant au moins un capteur non acoustique à sortie électrique (4) apte à délivrer au moins un signal électrique représentatif d'au moins une grandeur physique, un transducteur électro-optique passif (60) soumis audit signal électrique et une portion (13a) d'une fibre optique (100a) destinée à véhiculer des mesures acoustiques et non acoustiques comprenant une première zone sensible (130) sur laquelle agit ledit transducteur électro-optique passif (60), le transducteur électro-optique passif (60) agissant sur une contrainte mécanique subie par la première zone sensible (130) de façon qu'une valeur d'une propriété mesurable d'un premier signal optique véhiculé par la fibre optique destinée à véhiculer des mesures acoustiques et non acoustiques (100a) est représentative du signal électrique, et au moins une cellule photovoltaïque (18) couplée électriquement audit capteur non acoustique (4) pour alimenter électriquement ledit capteur (4), **caractérisée en ce que** la cellule photovoltaïque (18) est alimentée en énergie lumineuse au moyen d'une fibre optique d'alimentation (19, 190) couplée à une source optique (S).

9. Dispositif de mesure (20) destiné à être intégré dans un sonar, comprenant :
- au moins une unité de mesure (50) selon la revendication 8,
- la fibre optique (100a) destinée à véhiculer des mesures acoustiques et non acoustiques,
- au moins un hydrophone à fibre optique (3),
- au moins une fibre optique (100b) destinée à véhiculer des mesures acoustiques comprenant au moins une zone sensible (11bj) sur laquelle agit au moins un dudit au moins un hydrophone à fibre optique de façon qu'une valeur de la propriété mesurable d'un deuxième signal optique, véhiculé par la fibre optique acoustique, est représentative de la pression acoustique mesurée par ledit au moins un dudit au moins un hydrophone à fibre optique (3),
- une fibre optique principale (14) couplée optiquement à la fibre optique destinée à véhiculer des mesures acoustiques (100b) et à la fibre optique (100a) destinée à véhiculer des mesures acoustiques et non acoustiques de façon que la fibre optique principale (14) véhicule ledit premier signal optique et ledit deuxième signal optique, ledit premier signal optique et ledit deuxième signal optique étant véhiculés de façon multiplexée le long de fibre optique principale (14), dans lequel la cellule photovoltaïque d'au moins une unité de mesure est alimentée par ladite fibre optique d'alimentation (190) distincte de la fibre optique (100b) destinée à véhiculer des mesures acoustiques et de la fibre optique (100a) destinée à véhiculer des mesures acoustiques et non acoustiques,
- ladite fibre optique d'alimentation (190) étant couplée optiquement à un coupleur optique (15) assurant un couplage entre la fibre optique principale (14), la fibre optique destinée à véhiculer des mesures acoustique (100b) et la fibre optique destinée à véhiculer des mesures acoustiques et non acoustiques (100a).

10. Dispositif de mesure (20) destiné à être intégré dans un sonar, comprenant :
- la fibre optique (100a) destinée à véhiculer des mesures acoustiques et non acoustiques,
- au moins une unité de mesure (50) selon la revendication 8,
- au moins un hydrophone à fibre optique (3),
- au moins une fibre optique (100b) destinée à véhiculer des mesures acoustiques comprenant au moins une zone sensible (11bj) sur laquelle agit au moins un dudit au moins un hydrophone à fibre optique de façon qu'une valeur de la propriété mesurable d'un deuxième signal optique, véhiculé par la fibre optique acoustique, est représentative de la pression acoustique mesurée par ledit au moins un dudit au moins un hydrophone à fibre optique (3),
- une fibre optique principale (14) couplée optiquement à la fibre optique destinée à véhiculer des mesures acoustiques (100b) et à la fibre optique (100a) destinée à véhiculer des mesures acoustiques et non acoustiques de façon que la fibre optique principale (14) véhicule ledit premier signal optique et ledit deuxième signal optique, ledit premier signal optique et ledit deuxième signal optique étant véhiculés de façon multiplexée le long de fibre optique principale (14),
dans lequel la cellule photovoltaïque d'au moins une unité de mesure est alimentée par ladite fibre optique d'alimentation (19) distincte de la fibre optique (100b) destinée à véhiculer des mesures acoustiques et de la fibre optique (100a) destinée à véhiculer des mesures acoustiques et non acoustiques
ladite fibre optique d'alimentation (19) étant couplée directement a une source optique S.

11. Dispositif de mesure (20) selon la revendication 7, dans lequel au moins une fibre optique destinée à véhiculer des mesures acoustiques est une fibre optique destinée à véhiculer des mesures non acoustiques.

12. Dispositif de mesure (20) selon l'une quelconque des revendications 7, 9, 10 et 11, dans lequel au moins une cellule photovoltaïque d'au moins une unité de mesure est alimentée au moyen de plusieurs fibres optiques dites d'alimentation.

13. Dispositif de mesure (20) selon l'une quelconque des revendications 7, 9 et 10 à 12, dans lequel le transducteur électro-optique passif (6, 60) est un transducteur piézoélectrique.

14. Dispositif de mesure (20) selon l'une quelconque des revendications 7, 9 et 10 à 13, dans lequel le signal électrique est un signal numérique.

15. Dispositif de mesure (20) selon la revendication précédente, dans lequel le capteur est apte à délivrer des mesures relatives à plusieurs grandeurs physiques, le signal électrique étant une trame numérique dans lequel les mesures relatives aux différentes grandeurs physiques sont multiplexées temporellement.

16. Dispositif de mesure (20) selon l'une quelconque des revendications 7, 9 et 10 à 15, dans lequel au moins un capteur non acoustique à sortie électrique est un capteur de cap.

17. Système de mesure comprenant un dispositif de mesure selon l'une quelconque des revendications 7, 9 et 10 à 16, comprenant un dispositif de démultiplexage (16) comprenant au moins un démultiplexeur optique relié à la fibre optique principale (14) recevant ledit premier signal et ledit deuxième signal et permettant d'isoler le premier signal optique et ledit deuxième signal optique.

## Patentansprüche

1. Nicht-akustische Messeinheit (5, 50), die zum Integrieren in eine volloptische Antenne (2) bestimmt ist, die mindestens ein Hydrophon umfasst, wobei die nicht-akustische Messeinheit (5, 50) Folgendes umfasst: mindestens einen nicht-akustischen Sensor mit elektrischem Ausgang (4), der zum Liefern mindestens eines elektrischen Signals geeignet ist, das für mindestens eine physikalische Größe repräsentativ ist, einen passiven elektrooptischen Wandler (6, 60), der dem elektrischen Signal ausgesetzt ist, und einen Abschnitt (12a, 13a) einer zum Transportieren nicht-akustischer Messwerte bestimmten optischen Faser, die eine erste empfindliche Zone (13, 130) umfasst, auf die der passive elektrooptische Wandler (6, 60) einwirkt, wobei der passive elektrooptische Wandler (6, 60) auf eine mechanische Beanspruchung einwirkt, der die erste empfindliche Zone (13, 130) ausgesetzt ist, so dass ein Wert einer messbaren Eigenschaft eines ersten optischen Signals, das von der zum Transportieren nicht-akustischer Messwerte (12) bestimmten optischen Faser transportiert wird, für das elektrische Signal repräsentativ ist, und mindestens eine photovoltaische Zelle (18), die elektrisch mit dem nicht-akustischen Sensor (4) gekoppelt ist, um den Sensor (4) mit Strom zu versorgen, wobei die photovoltaische Zelle (18) mittels der zum Transportieren nicht-akustischer Messwerte (12) bestimmten optischen Faser mit Lichtenergie versorgt wird.

2. Nicht-akustische Messeinheit (5, 50) nach Anspruch 1, wobei die photovoltaische Zelle (18) mittels eines Pumpenrests aus dem elektrooptischen Wandler mit Lichtenergie versorgt wird.

3. Nicht-akustische Messeinheit (5, 50) nach einem der vorhergehenden Ansprüche, wobei der passive elektrooptische Wandler (6, 60) ein piezoelektrischer Wandler ist.

4. Nicht-akustische Messeinheit (5, 50) nach einem der vorhergehenden Ansprüche, wobei das elektrische Signal ein digitales Signal ist.

5. Nicht-akustische Messeinheit (5, 50) nach dem vorhergehenden Anspruch, wobei der Sensor zum Liefern von Messwerten bezüglich mehrerer physikalischer Größen geeignet ist, wobei das elektrische Signal ein digitaler Frame ist, in dem die Messwerte bezüglich der verschiedenen physikalischen Größen zeitlich gemultiplext sind.

6. Nicht-akustische Messeinheit (5, 50) nach einem der vorhergehenden Ansprüche, wobei mindestens ein nicht-akustischer Sensor mit elektrischem Ausgang ein Kurssensor ist.

7. Messgerät (20), das zum Integrieren in ein Sonar bestimmt ist, das Folgendes umfasst:
- mindestens eine Messeinheit (5) nach einem der vorhergehenden Ansprüche und die zum Transportieren nicht-akustischer Messwerte bestimmte optische Faser (12),
- mindestens ein faseroptisches Hydrophon (3),
- mindestens eine zum Transportieren akustischer Messwerte bestimmte optische Faser (10a, 10b), die mindestens eine empfindliche Zone (11ai, 11bj) umfasst, auf die mindestens eines der mindestens einen faseroptischen Hydrophone einwirkt, so dass ein Wert der messbaren Eigenschaft eines von der akustischen optischen Faser transportierten zweiten optischen Signals für den von dem mindestens einen der mindestens einen faseroptischen Hydrophone (3) gemessenen Schalldruck repräsentativ ist,
- eine optische Hauptfaser (14), die optisch mit der zum Transportieren akustischer Messwerte bestimmten optischen Faser (10a, 10b) und mit der zum Transportieren nicht-akustischer Messwerte bestimmten optischen Faser (12) gekoppelt ist, so dass die optische Hauptfaser (14) das erste optische Signal und das zweite optische Signal transportiert, wobei das erste optische Signal und das zweite optische Signal über die optische Hauptfaser (14) gemultiplext transportiert werden.

8. Nicht-akustische Messeinheit (50), die zum Integrieren in eine volloptische Antenne (2) bestimmt ist, die mindestens ein Hydrophon umfasst, wobei die nicht-akustische Messeinheit (50) Folgendes umfasst: mindestens einen nicht-akustischen Sensor mit elektrischem Ausgang (4), der zum Liefern mindestens eines elektrischen Signals geeignet ist, das für mindestens eine physikalische Größe repräsentativ ist, einen passiven elektrooptischen Wandler (60), der dem elektrischen Signal ausgesetzt ist, und einen Abschnitt (13a) einer zum Transportieren von akustischen und nicht-akustischen Messwerten bestimmten optischen Faser (100a), die eine erste empfindliche Zone (130) umfasst, auf die der passive elektrooptische Wandler (60) einwirkt, wobei der passive elektrooptische Wandler (60) auf eine mechanische Beanspruchung einwirkt, der die erste empfindliche Zone (130) ausgesetzt ist, so dass ein Wert einer messbaren Eigenschaft eines ersten optischen Signals, das von der zum Transportieren akustischer und nicht-akustischer Messwerte bestimmten optischen Faser (100a) transportiert wird, für das elektrische Signal repräsentativ ist, und mindestens eine photovoltaische Zelle (18), die elektrisch mit dem nicht-akustischen Sensor (4) gekoppelt ist, um den Sensor (4) mit Strom zu versorgen, **dadurch gekennzeichnet, dass** die photovoltaische Zelle (18) mittels einer mit einer optischen Quelle (S) gekoppelten optischen Versorgungsfaser (19, 190) mit Lichtenergie versorgt wird.

9. Messgerät (20), das zum Integrieren in ein Sonar bestimmt ist, das Folgendes umfasst:
- mindestens eine Messeinheit (50) nach Anspruch 8,
- die zum Transportieren von akustischen und nicht-akustischen Messwerten bestimmte optische Faser (100a),
- mindestens ein faseroptisches Hydrophon (3),
- mindestens eine zum Transportieren akustischer Messwerte bestimmte optische Faser (100b), die mindestens eine empfindliche Zone (11bj) umfasst, auf die mindestens eines der mindestens einen faseroptischen Hydrophone einwirkt, so dass ein Wert der messbaren Eigenschaft eines zweiten durch die akustische optische Faser transportierten optischen Signals für den von dem mindestens einen der mindestens einen faseroptischen Hydrophone (3) gemessenen Schalldruck repräsentativ ist,
- eine optische Hauptfaser (14), die optisch mit der zum Transportieren akustischer Messwerte (100b) bestimmten optischen Faser und mit der zum Transportieren akustischer und nicht-akustischer Messwerte (100a) bestimmten optischen Faser gekoppelt ist, so dass die optische Hauptfaser (14) das erste optische Signal und das zweite optische Signal transportiert, wobei das erste optische Signal und das zweite optische Signal gemultiplext über die optische Hauptfaser (14) transportiert wird, wobei die photovoltaische Zelle von mindestens einer Messeinheit durch die optische Versorgungsfaser (190) versorgt wird, die sich von der zum Transportieren von akustischen Messwerten bestimmten optischen Faser (100b) und der zum Transportieren von akustischen und nicht-akustischen Messwerten bestimmten optischen Faser (100a) unterscheidet,
- wobei die optische Versorgungsfaser (190) optisch mit einem optischen Koppler (15) gekoppelt ist, der eine Kopplung zwischen der optischen Hauptfaser (14), der zum Transportieren von akustischen Messwerten (100b) bestimmten optischen Faser und der zum Transportieren von akustischen und nicht-akustischen Messwerten bestimmten optischen Faser (100a) gewährleistet.

10. Messgerät (20), das zum Integrieren in ein Sonar bestimmt ist, das Folgendes umfasst:
- die zum Transportieren von akustischen und nicht-akustischen Messwerten bestimmte optische Faser (100a),
- mindestens eine Messeinheit (50) nach Anspruch 8,
- mindestens ein faseroptisches Hydrophon (3),
- mindestens eine zum Transportieren akustischer Messwerte bestimmte optische Faser (100b), die mindestens eine empfindliche Zone (11bj) umfasst, auf die mindestens eines der mindestens einen faseroptischen Hydrophone einwirkt, so dass ein Wert der messbaren Eigenschaft eines zweiten durch die akustische optische Faser transportierten optischen Signals für den von dem mindestens einen der mindestens einen faseroptischen Hydrophone (3) gemessenen Schalldruck repräsentativ ist,
- eine optische Hauptfaser (14), die optisch mit der zum Transportieren von akustischen Messwerten bestimmten optischen Faser (100b) und mit der zum Transportieren von akustischen und nicht-akustischen Messungen gekoppelten optischen Faser (100a) gekoppelt ist, so dass die optische Hauptfaser (14) das erste optische Signal und das zweite optische Signal transportiert, wobei das erste optische Signal und das zweite optische Signal gemultiplext über die optische Hauptfaser (14) transportiert werden,
wobei die photovoltaische Zelle von mindestens einer Messeinheit durch die optische Versorgungsfaser (19) versorgt wird, die sich von der zum Transportieren akustischer Messwerte bestimmten optischen Faser (100b) und der zum Transportieren akustischer und nicht-akustischer Messungen bestimmten optischen Faser (100a) unterscheidet,
wobei die optische Versorgungsfaser (19) direkt mit einer optischen Quelle S gekoppelt ist.

11. Messgerät (20) nach Anspruch 7, wobei mindestens eine zum Transportieren von akustischen Messwerten bestimmte optische Faser eine zum Transportieren von nicht-akustischen Messwerten bestimmte optische Faser ist.

12. Messgerät (20) nach einem der Ansprüche 7, 9, 10 und 11, wobei mindestens eine photovoltaische Zelle mindestens einer Messeinheit mittels mehrerer sogenannter optischer Versorgungsfasern versorgt wird.

13. Messgerät (20) nach einem der Ansprüche 7, 9 und 10 bis 12, wobei der passive elektrooptische Wandler (6, 60) ein piezoelektrischer Wandler ist.

14. Messgerät (20) nach einem der Ansprüche 7, 9 und 10 bis 13, wobei das elektrische Signal ein digitales Signal ist.

15. Messgerät (20) nach dem vorhergehenden Anspruch, wobei der Sensor Messwerte bezüglich mehrerer physikalischer Größen liefern kann, wobei das elektrische Signal ein digitaler Frame ist, in dem die Messwerte bezüglich der verschiedenen physikalischen Größen zeitlich gemultiplext sind.

16. Messgerät (20) nach einem der Ansprüche 7, 9 und 10 bis 15, wobei mindestens ein nicht-akustischer Sensor mit elektrischem Ausgang ein Kurssensor ist.

17. Messsystem, das ein Messgerät nach einem der Ansprüche 7, 9 und 10 bis 16 umfasst, das ein Demultiplexergerät (16) umfasst, das mindestens einen optischen Demultiplexer umfasst, der mit der optischen Hauptfaser (14) verbunden ist, die das erste Signal und das zweite Signal empfängt und es zulässt, das erste optische Signal und das zweite optische Signal zu isolieren.

## Claims

1. A non-acoustic measurement unit (5, 50) intended to be integrated into a fully optical antenna (2) comprising at least one hydrophone, said non-acoustic measurement unit (5, 50) comprising at least one non-acoustic sensor (4) with an electrical output able to deliver at least one electrical signal representing at least one physical quantity, a passive electro-optical transducer (6, 60) subjected to said electrical signal and a portion (12a, 13a) of an optical fibre intended to convey non-acoustic measurements comprising a first sensitive zone (13, 130), on which said passive electro-optical transducer (6, 60) acts, the passive electro-optical transducer (6, 60) acting on a mechanical constraint experienced by the first sensitive zone (13, 130) in such a way that a value of a measurable property of a first optical signal conveyed by the optical fibre intended to convey non-acoustic measurements (12) represents the electrical signal, and at least one photovoltaic cell (18) electrically coupled to said non-acoustic sensor (4) so as to electrically power said sensor (4), wherein the photovoltaic cell (18) is supplied with light energy by means of the optical fibre intended to convey non-acoustic measurements (12).

2. The non-acoustic measurement unit (5, 50) according to claim 1, wherein the photovoltaic cell (18) is supplied with light energy by means of a pump residue originating from the electro-optical transducer.

3. The non-acoustic measurement unit (5, 50) according to any one of the preceding claims, wherein the passive electro-optical transducer (6, 60) is a piezoelectric transducer.

4. The non-acoustic measurement unit (5, 50) according to any one of the preceding claims, wherein the electrical signal is a digital signal.

5. The non-acoustic measurement unit (5, 50) according to the preceding claim, wherein the sensor is able to deliver measurements relating to multiple physical quantities, with the electrical signal being a digital frame in which the measurements relating to the various physical quantities are temporally multiplexed.

6. The non-acoustic measurement unit (5, 50) according to any one of the preceding claims, wherein at least one non-acoustic sensor with an electrical output is a heading sensor.

7. A measurement device (20) intended to be integrated into a sonar, comprising:
- at least one measurement unit (5) according to any one of the preceding claims and the optical fibre (12) intended to convey non-acoustic measurements;
- at least one fibre optic hydrophone (3);
- at least one optical fibre (10a, 10b) intended to convey acoustic measurements comprising at least one sensitive zone (11ai, 11bj), on which at least one of said at least one fibre optic hydrophones acts in such a way that a value of the measurable property of a second optical signal, conveyed by the acoustic optical fibre, represents the acoustic pressure measured by said at least one of said at least one hydrophone fibre optics (3);
- a main optical fibre (14) optically coupled to the optical fibre (10a, 10b) intended to convey acoustic measurements and to the optical fibre (12) intended to convey non-acoustic measurements in such a way that the main optical fibre (14) conveys said first optical signal and said second optical signal, with said first optical signal and said second optical signal being conveyed in a multiplexed manner along the main optical fibre (14).

8. A non-acoustic measurement unit (50) intended to be integrated into a fully optical antenna (2) comprising at least one hydrophone, said non-acoustic measurement unit (50) comprising at least one non-acoustic sensor (4) with an electrical output able to deliver at least one electrical signal representing at least one physical quantity, a passive electro-optical transducer (60) subjected to said electrical signal and a portion (13a) of an optical fibre (100a) intended to convey acoustic and non-acoustic measurements comprising a first sensitive zone (130), on which said passive electro-optical transducer (60) acts, the passive electro-optical transducer (60) acting on a mechanical constraint experienced by the first sensitive zone (130) in such a way that a value of a measurable property of a first optical signal conveyed by the optical fibre (100a) intended to convey acoustic and non-acoustic measurements represents the electrical signal, and at least one photovoltaic cell (18) electrically coupled to said non-acoustic sensor (4) so as to electrically power said sensor (4), **characterised in that** the photovoltaic cell (18) is supplied with light energy by means of a supply optical fibre (19, 190) coupled to an optical source (S).

9. A measurement device (20) intended to be integrated into a sonar, comprising:
- at least one measurement unit (50) according to claim 8;
- the optical fibre (100a) intended to convey acoustic and non-acoustic measurement;
- at least one fibre optic hydrophone (3);
- at least one optical fibre (100b) intended to convey acoustic measurements comprising at least one sensitive zone (11bj), on which at least one of said at least one fibre optic hydrophones acts in such a way that a value of the measurable property of a second optical signal, conveyed by the acoustic optical fibre, represents the acoustic pressure measured by said at least one of said at least one hydrophone fibre optics (3);
- a main optical fibre (14) optically coupled to the optical fibre (100b) intended to convey acoustic measurements and to the optical fibre (100a) intended to convey acoustic and non-acoustic measurements in such a way that the main optical fibre (14) conveys said first optical signal and said second optical signal, with said first optical signal and said second optical signal being conveyed in a multiplexed manner along the main optical fibre (14), wherein the photovoltaic cell of at least one measurement unit is supplied by said supply optical fibre (190) distinct from the optical fibre (100b) intended to convey acoustic measurements and from the optical fibre (100a) intended to convey acoustic and non-acoustic measurements;
- said supply optical fibre (190) being optically coupled to an optical coupler (15) providing a coupling between the main optical fibre (14), the optical fibre (100b) intended to convey acoustic measurements and the optical fibre (100a) intended to convey acoustic and non-acoustic measurements.

10. A measurement device (20) intended to be integrated into a sonar, comprising:
- the optical fibre (100a) intended to convey acoustic and non-acoustic measurements;
- at least one measurement unit (50) according to claim 8;
- at least one fibre optic hydrophone (3);
- at least one optical fibre (100b) intended to convey acoustic measurements comprising at least one sensitive zone (11bj), on which at least one of said at least one fibre optic hydrophones acts in such a way that a value of the measurable property of a second optical signal, conveyed by the acoustic optical fibre, represents the acoustic pressure measured by said at least one of said at least one hydrophone fibre optics (3);
- a main optical fibre (14) optically coupled to the optical fibre (100b) intended to convey acoustic measurements and to the optical fibre (100a) intended to convey acoustic and non-acoustic measurements in such a way that the main optical fibre (14) conveys said first optical signal and said second optical signal, with said first optical signal and said second optical signal being conveyed in a multiplexed manner along the main optical fibre (14),
wherein the photovoltaic cell of at least one measurement unit is supplied by said supply optical fibre (19) distinct from the optical fibre (100b) intended to convey acoustic measurements and from the optical fibre (100a) intended to convey acoustic and non-acoustic measurements;
said supply optical fibre (19) being directly coupled to an optical source S.

11. The measurement device (20) according to claim 7, wherein at least one optical fibre intended to convey acoustic measurements is an optical fibre intended to convey non-acoustic measurements.

12. The measurement device (20) according to any one of claims 7, 9, 10 and 11, wherein at least one photovoltaic cell of at least one measurement unit is supplied by means of multiple so-called supply optical fibres.

13. The measurement device (20) according to any one of claims 7, 9 and 10 to 12, according to any one of the preceding claims, wherein the passive electro-optical transducer (6, 60) is a piezoelectric transducer.

14. The measurement device (20) according to any one of claims 7, 9 and 10 to 13, wherein the electrical signal is a digital signal.

15. The measurement device (20) according to the preceding claim, wherein the sensor is able to deliver measurements relating to multiple physical quantities, with the electrical signal being a digital frame in which the measurements relating to the various physical quantities are temporally multiplexed.

16. The measurement device (20) according to any one of claims 7, 9 and 10 to 15, wherein at least one non-acoustic sensor with an electrical output is a heading sensor.

17. A measurement system comprising a measurement device according to any one of claims 7, 9 and 10 to 16, comprising a demultiplexing device (16) comprising at least one optical demultiplexer connected to the main optical fibre (14) receiving said first signal and said second signal and allowing the first optical signal and said second optical signal to be isolated.
